(19) Europäisches Patentamt
European Patent Office
Office européen des brevets

(11) **EP 2 411 709 B1**

(12) **EUROPÄISCHE PATENTSCHRIFT**

(45) Veröffentlichungstag und Bekanntmachung des Hinweises auf die Patenterteilung:
**11.01.2017 Patentblatt 2017/02**

(21) Anmeldenummer: **10711575.0**

(22) Anmeldetag: **25.03.2010**

(51) Int Cl.:
*F16J 9/26* (2006.01)     *C22C 38/34* (2006.01)
*C22C 38/44* (2006.01)     *C22C 38/46* (2006.01)
*F16J 10/04* (2006.01)

(86) Internationale Anmeldenummer:
**PCT/EP2010/001887**

(87) Internationale Veröffentlichungsnummer:
**WO 2010/108685 (30.09.2010 Gazette 2010/39)**

(54) **NITRIERFÄHIGE STAHLKOLBENRINGE UND STAHLZYLINDERLAUFBUCHSEN SOWIE GIESSVERFAHREN ZU DEREN HERSTELLUNG**

NITRATABLE STEEL PISTON RINGS AND STEEL CYLINDRICAL SLEEVES, AND CASTING METHOD FOR THE PRODUCTION THEREOF

SEGMENTS DE PISTON EN ACIER ET CHEMISES DE CYLINDRE EN ACIER PRÉSENTANT UNE APTITUDE À LA NITRURATION, AINSI QUE PROCÉDÉ DE COULÉE POUR LEUR FABRICATION

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **26.03.2009 DE 102009015008**

(43) Veröffentlichungstag der Anmeldung:
**01.02.2012 Patentblatt 2012/05**

(73) Patentinhaber: **Federal-Mogul Burscheid GmbH 51399 Burscheid (DE)**

(72) Erfinder: **PELSOECZY, Laszlo 51515 Kürten (DE)**

(74) Vertreter: **Kurig, Thomas Patentanwälte Becker, Kurig, Straus Bavariastrasse 7 80336 München (DE)**

(56) Entgegenhaltungen:
**EP-A- 0 295 111          WO-A-03/098079
DE-A1-102006 038 670    JP-A- 1 205 063
JP-A- 3 122 257           JP-A- 5 132 738
US-A- 3 990 892           US-A- 5 081 760**

## Beschreibung

Die vorliegende Erfindung betrifft Kolbenringe und Zylinderlaufbuchsen, die eine gute Nitrierfähigkeit aufweisen und in einem Gießverfahren herstellbar sind. Weiterhin betrifft die vorliegende Erfindung nitrierte Kolbenringe und Zylinderlaufbuchsen, welche aus den erfindungsgemäßen Kolbenringen und Zylinderlaufbuchsen mit guter Nitrierfähigkeit herstellbar sind. Außerdem betrifft die vorliegende Erfindung ein Verfahren zur Herstellung der erfindungsgemäßen Kolbenringe und Zylinderlaufbuchsen mit guter Nitrierfähigkeit sowie ein Verfahren zur Herstellung der erfindungsgemäßen nitrierten Kolbenringe und Zylinderlaufbuchsen.

## Stand der Technik

Kolbenringe dichten in einem Verbrennungskraftmotor den zwischen Kolbenkopf und Zylinderwand vorhandenen Spalt gegenüber dem Brennraum ab. Bei der Auf- und Abbewegung des Kolbens gleitet der Kolbenring einerseits mit seiner äußeren Umfangsfläche in ständiger federnder Anlage gegen die Zylinderwand, andererseits gleitet der Kolbenring, bedingt durch die Kippbewegungen des Kolbens, oszillierend in seiner Kolbenringnut, wobei seine Flanken wechselnd an der oberen oder unteren Nutenflanke der Kolbenringnut anliegen. Bei den jeweils gegeneinander laufenden Gleitpartnern tritt in Abhängigkeit des Materials ein mehr oder weniger starker Verschleiß auf, der bei einem Trockenlauf zu so genannten Fressern, Riefenbildung und schließlich zu einer Zerstörung des Motors führen kann. Um das Gleit- und Verschleißverhalten von Kolbenringen gegenüber der Zylinderwand zu verbessern, wurden diese an deren Umfangsfläche mit Beschichtungen aus unterschiedlichen Materialien versehen.

Bei Zylinderlaufbuchsen wie beispielsweise denen von Hubkolben-Verbrennungskraftmaschinen muss eine hohe Verschleißfestigkeit gegeben sein, da anderenfalls, d.h. bei dünner werdender Zylinderlaufbuchse, die Gasleckage und der Ölverbrauch zunehmen können sowie die Leistung des Motors sich verschlechtert. Durch eine sich abreibende Zylinderlaufbuchse ergibt sich ein immer größeres Stoßspiel der Kolbenringe, so dass darüber mehr Verbrennungsgas in das Kurbelgehäuse gelangt. Ferner kann es im Extremfall auch dazu kommen, dass der Kolbenring nicht mehr sauber an der Zylinderlaufbuchse anliegt und auch dadurch weiteres Gas in das Kurbelgehäuse gelangt.

Zur Herstellung hoch beanspruchter Teile von Verbrennungskraftmotoren, wie beispielsweise Kolbenringen und Zylinderlaufbuchsen, werden meist Gusseisenwerkstoffe bzw. Gusseisenlegierungen verwendet. Kolbenringe, insbesondere Kompressionsringe, unterliegen in hochbeanspruchten Motoren einer zunehmenden Belastung, unter anderem Kompressionsspitzendruck, Verbrennungstemperatur, EGR und Schmierfilmreduzierung, die deren Funktionseigenschaften, wie Verschleiß, Brandspurbeständigkeit, Microwelding und Korrosionsbeständigkeit, maßgeblich beeinflussen.

Gusseisenwerkstoffe gemäß dem Stand der Technik weisen jedoch ein hohes Bruchrisiko auf, so dass es bei der Verwendung bisheriger Werkstoffe häufig zu Ringbrüchen kommt. Gestiegene mechanisch-dynamische Belastungen führen zu kürzeren Lebensdauern von Kolbenringen und Zylinderlaufbuchsen. Ebenso kommt es zu starkem Verschleiß und Korrosion an Lauffläche und Flanke.

Höhere Zünddrücke, reduzierte Emissionen sowie die Kraftstoff-Direkteinspritzung bedeuten steigende Belastungen für Kolbenringe. Die Folge sind Beschädigungen und Aufplattierungen von Kolbenmaterial vor allem auf der unteren Kolbenringflanke.

Aufgrund der höheren mechanischen und dynamischen Beanspruchungen von Kolbenringen und Zylinderlaufbuchsen fordern immer mehr Motorenhersteller Kolbenringe und Zylinderlaufbuchsen aus hochwertigem Stahl (vergütet und hochlegiert, wie beispielsweise Werkstoff 1.4112). Hierbei bezeichnet man Eisenwerkstoffe mit weniger als 2,08 Gew.-% Kohlenstoff als Stahl. Liegt der Kohlenstoffgehalt höher, so redet man von Gusseisen. Stahlwerkstoffe besitzen gegenüber Gusseisen bessere Festigkeits- und Zähigkeitseigenschaften, da keine Störung durch freien Graphit im Grundgefüge vorhanden ist.

Meist werden hochchromlegierte martensitische Stähle für die Herstellung von Stahlkolbenringen oder Stahlzylinderlaufbuchsen eingesetzt. Der Einsatz dieser Stähle weist aber den Nachteil auf, dass die Herstellungskosten im Vergleich zu Gusseisenbauteilen signifikant höher sind.

Stahlkolbenringe werden aus Profildraht hergestellt. Der Profildraht wird rund gewickelt, aufgeschnitten und über einen "Unrund"-Dorn gezogen. Auf diesem Dorn erhält der Kolbenring durch einen Glühprozess seine erwünschte unrunde Form, wodurch die geforderten Tangentialkräfte eingestellt werden. Ein weiterer Nachteil der Herstellung von Kolbenringen aus Stahl ist, dass ab einem gewissen Durchmesser die Ringherstellung (Wickeln) aus Stahldraht nicht mehr möglich ist.

Ein herkömmlicher Stahlkolbenring wird in der EP 0 295 111 A2 offenbart. Er besteht aus einer Legierung, der Aluminium zugesetzt wird, um eine leichte Herstellbarkeit des Profildrahts und eine gute Weiterverarbeitbarkeit zum Kolbenring zu gewährleisten.

Kolbenringe aus Gusseisen werden dagegen bereits unrund gegossen, so dass sie von Anfang an eine ideale Form aufweisen. Gusseisen besitzt eine wesentlich niedrigere Schmelztemperatur als Stahl. Der Unterschied kann je nach chemischer Zusammensetzung bis zu 350°C betragen. Gusseisen ist daher einfacher zu schmelzen und zu gießen, da eine niedrigere Schmelztemperatur eine niedrigere Gießtemperatur und damit eine kleinere abkühlungsbedingte Schwindung bedeutet, wodurch der gegossene Werkstoff weniger Lunker bzw. Warm- und Kaltrisse aufweist. Eine niedrigere Gießtemperatur führt weiterhin zu einer geringeren Belastung des Formstoff (Erosion, Gasporositäten, Sandeinschlüsse) und des Ofens sowie zu geringeren Schmelzkosten.

Die Schmelztemperatur des Eisenwerkstoffs hängt nicht nur von seinem Kohlenstoffgehalt, sondern auch von dem "Sättigungsgrad" ab. Es gilt die vereinfachte Formel:

$$S_c = C/(4,26 - 1/3(Si+P)).$$

Je näher der Sättigungsgrad an 1 liegt, desto niedriger ist die Schmelztemperatur. Bei Gusseisen wird zumeist ein Sättigungsgrad von 1,0 angestrebt, wobei das Gusseisen eine Schmelztemperatur von 1150°C aufweist. Der Sättigungsgrad von Stahl beträgt, abhängig von der chemischen Zusammensetzung, ungefähr 0,18. Eutektischer Stahl weist eine Schmelztemperatur von 1500°C auF

Der Sättigungsgrad kann durch den Si- oder P-Gehalt deutlich beeinflusst werden. Zum Beispiel wirkt sich ein um 3 Gew.-% höherer Gehalt an Silizium ähnlich wie ein 1 Gew.-% höherer C-Gehalt aus. Es ist somit möglich, einen Stahlwerkstoff mit einem C-Gehalt von 1 Gew.-% und 9,78 Gew.-% Silizium herzustellen, der die gleiche Schmelztemperatur wie Gusseisen mit einem Sättigungsgrad von 1,0 (C: 3,26 Gew.-%, Si: 3,0 Gew.-%) aufweist.

Durch eine drastische Erhöhung des Si-Gehalts kann der Sättigungsgrad des Stahlwerkstoffs erhöht werden und die Schmelztemperatur auf das Niveau von Gusseisen abgesenkt werden. Somit ist es möglich, Stahl mit Hilfe derjenigen Technik herzustellen, die auch für die Herstellung von Gusseisen, beispielsweise GOE 44, verwendet wird.

Kolbenringe und Zylinderlaufbuchsen aus hochsiliziumhaltigem Stahlgusswerkstoff sind im Stand der Technik bekannt. Allerdings beeinflusst das in höheren Mengen vorhandene Silizium die Härtbarkeit des Werkstoffs negativ, da dessen Austenitumwandlungstemperatur "Ac3" erhöht wird.

Stahlkolbenringe mit geringem Siliziumanteil werden hingegen in herkömmlicher Weise aus Profildraht hergestellt. Ein solcher Stahlkolbenring mit geringem Siliziumanteil wird in der JP 03-122257 A beschrieben.

Ein im Stand der Technik übliches Verfahren, um dennoch eine hohe Härte der Kolberingoberfläche zu gewährleisten, bestände in der Nitrierung des Werkstoffs. Allerdings hat sich gezeigt, dass hochsiliziumhaltige Stahlgusswerkstoffe des Standes der Technik eine schlechte Nitrierbarkeit aufweisen.

**Beschreibung der Erfindung**

Folglich ist es Aufgabe der vorliegenden Erfindung, Stahlkolbenringe und Stahlzylinderlaufbuchsen bereitzustellen, welche als Grundkörper eine hochsiliziumhaltige Stahlwerkstoffzusammensetzung aufweisen und welche eine gute Nitrierbarkeit aufweisen, sowie nitrierte Kolbenringe und Zylinderlaufbuchsen bereitzustellen. Die nitrierte Stahlwerkstoffzusammensetzung der nitrierten Kolbenringe und Zylinderlaufbuchsen soll durch die Herstellung im Schwerkraftguss die Eigenschaften von vergütetem Gusseisen mit Kugelgraphit in mindestens einem der folgenden Punkte übertreffen:

- Mechanische Eigenschaften wie E-Modul, Biegefestigkeit
- Widerstandsfähigkeit gegenüber Brüchen
- Gestaltfestigkeit
- Flankenverschleiß
- Laufflächenverschleiß

Diese Aufgabe wird erfindungsgemäß durch Stahlkolbenringe und Stahlzylinderlaufbuchsen gelöst, die als Grundkörper eine Stahlwerkstoffzusammensetzung aufweisen, welche die folgenden Elemente im angegebenen Anteil enthält:

| | | |
|---|---|---|
| B: | 0 - 0,5 | Gew.-% |
| C: | 0,5 - 0,95 | Gew.-% |
| Cr: | 11,0 - 14,5 | Gew.-% |
| Cu: | 0,003 - 2,0 | Gew.-% |
| Fe: | 72,055 - 84,55 | Gew.-% |
| Mn: | 0,1 - 1,0 | Gew.-% |
| Mo: | 0,2 - 1,0 | Gew.-% |
| Nb: | 0 - 0,05 | Gew.-% |
| Ni: | 1,5-3,0 | Gew.-% |
| P: | 0,003 - 0,005 | Gew.-% |
| Pb: | 0,003 - 0,05 | Gew.-% |
| S: | 0,003 - 0,04 | Gew.-% |
| Si: | 3,0 - 4,0 | Gew.-% |
| Sn: | 0 - 0,05 | Gew.-% |
| Ti: | 0 - 0,2 | Gew.-% |
| V: | 0,05 - 0,15 | Gew.-% |
| W: | 0 - 0,4 | Gew.-% |

wobei die Stahlwerkstoffzusammensetzung ein dendritisches Gefüge aufweist.

Es wird davon ausgegangen, dass die gute Nitrierbarkeit der erfindungsgemäßen Kolbenringe und Zylinderlaufbuchsen durch den Gehalt von Chrom gewährleistet wird. Chrom bildet bei einem Nitrierprozess sehr harte Nitride. Während der Zusatz von Chrom zu einer Stahlwerkstoffzusammensetzung allerdings normalerweise die Austenitumwandlungstemperatur des Werkstoffs weiter erhöhen würde und damit seine Härtbarkeit weiter verschlechtern würde, wurde erfindungsgemäß gefunden, dass die Zugabe von Nickel dieser Erhöhung der Austenitumwandlungstemperatur entgegenwirkt. Auf diese Weise wird erfindungsgemäß verhindert, dass eine Erhöhung der Austenitumwandlungstemperatur die durch die bessere Nitrierbarkeit der Stahlwerkstoffzusammensetzung erreichbare höhere Härtbarkeit der Werkstoffoberfläche durch eine gleichzeitige schlechtere Härtbarkeit des Grundkörpers wieder zunichte gemacht wird.

Um den Sättigungsgrad des verwendeten Stahlwerkstoffs zu erhöhen ist bevorzugt, dass der Siliziumgehalt des Stahlwerkstoffs mindestens 3,0 Gew.-% beträgt.

Herkömmliche Stahlkolbenringe, welche aus einem Profildraht hergestellt wurden, weisen ein fein verteiltes Gefüge ohne Dendriten auf. Bei manchen herkömmlichen Stahlkolbenringen ist jedoch die Zug- oder Walzrichtung des Profildrahtes noch im Gefüge erkennbar.

Durch Nitrieren der erfindungsgemäßen Stahlkolbenringe bzw. Stahlzylinderlaufbuchsen mit guter Nitrierbarkeit werden erfindungsgemäß nitrierte Stahlkolbenringe bzw. Stahlzylinderlaufbuchsen erhalten.

Die erfindungsgemäßen nitrierten Stahlkolbenringe und Stahlzylinderlaufbuchsen haben eine reduzierte Neigung, unter starker Hitze ihre Form zu verändern, und sorgen somit für ein dauerhaft hohes Leistungsvermögen und vermindern darüber hinaus den Ölverbrauch.

Die erfindungsgemäßen nitrierten Stahlkolbenringe und Stahlzylinderlaufbuchsen weisen weiterhin den Vorteil auf, dass ihre Herstellung mit den zur Herstellung von Gusseisen-Werkstücken notwendigen Maschinen und Technologien ermöglicht wird. Zudem entsprechen die Herstellungskosten denen von Gusseisen-Kolbenringen bzw. Grauguss-Zylinderlaufbuchsen, was dem Hersteller einen Kostenvorteil und eine bessere Wertschöpfung bietet. Ebenso können Werkstoffparameter frei vom Zulieferer eingestellt werden.

Erfindungsgemäß wird weiterhin ein Verfahren zur Herstellung erfindungsgemäßer Stahlkolbenringe und Stahlzylinderlaufbuchsen mit guter Nitrierbarkeit bereitgestellt, welches die folgenden Schritte umfasst:

a. Herstellen einer Schmelze der Ausgangsmaterialien, und
b. Abgießen der Schmelze in eine vorgefertigte Form.

Hierdurch werden Stahlkolbenringe und Stahlzylinderlaufbuchsen mit dendritischem Grundgefüge erhalten. Beispielsweise führt die herkömmliche Herstellung von Stahlkolbenringen aus einem Profildraht hingegen zu Kolbenringen mit einem fein verteilten Grundgefüge.

Als Ausgangsmaterialien können beispielsweise Stahlschrott, Kreislaufmaterial und Legierungsstoffe verwendet werden. Der Schmelzprozess erfolgt in einem Ofen, vorzugsweise einem Schmelzofen, besonders bevorzugt einem Kupolofen. Anschließend wird ein Rohling unter Erstarrung der Schmelze hergestellt. Der Stahlkolbenring bzw. die Stahlzylinderlaufbuchse kann dabei mit im Stand der Technik bekannte Methoden gegossen werden, wie beispielsweise Schleuderguss (eine bevorzugte Methode zur Herstellung von Zylinderlaufbuchsen), Strangguss, Stempel-Pressverfahren, Croning oder bevorzugt Grünsandformen.

Nach Erkalten des Kolbenrings bzw. der Zylinderlaufbuchse wird die Form ausgeleert und der erhaltene Rohling geputzt.

Gegebenenfalls kann der Kolbenring bzw. die Zylinderlaufbuchse anschließend vergütet werden. Diese erfolgt durch die folgenden Schritte:

c. Austenitisieren des Kolbenrings bzw. der Zylinderlaufbuchse oberhalb seiner bzw. ihrer Ac3-Temperatur,
d. Abschrecken des Kolbenrings bzw. der Zylinderlaufbuchse in einem geeigneten Abschreckmedium, und
e. Anlassen des Kolbenrings bzw. der Zylinderlaufbuchse bei einer Temperatur im Bereich von 400 bis 700°C in einem Schutzgasofen.

Als Abschreckmedium wird bevorzugt Öl verwendet.

Zur Herstellung eines erfindungsgemäßen nitrierten Kolbenrings oder einer Zylinderlaufbuchse erfolgt im Anschluss an die zuvor erwähnten Verfahrensschritte ein Nitrieren des erhaltenen Kolbenrings bzw. der Zylinderlaufbuchse. Dies kann beispielsweise durch Gasnitrieren, Plasmanitrieren oder Drucknitrieren erfolgen.

Das folgende Beispiel und die Figuren erläutern die Erfindung, ohne sie zu beschränken.

**Kurze Beschreibung der Zeichnungen**

Figur 1 zeigt eine schematische Zeichnung eines erfindungsgemäßen Kolbenrings.

Figur 2 zeigt einen vergrößerten Ausschnitt (500:1) des Grundgefüges eines erfindungsgemäßen Stahlkolbenrings.

Figur 3 zeigt einen vergrößerten Ausschnitt (200:1) des Grundgefüges eines erfindungsgemäßen Stahlkolbenrings.

Figur 4 zeigt einen vergrößerten Ausschnitt (500:1) des Grundgefüges eines herkömmlichen Stahlkolbenrings.

**Beispiel**

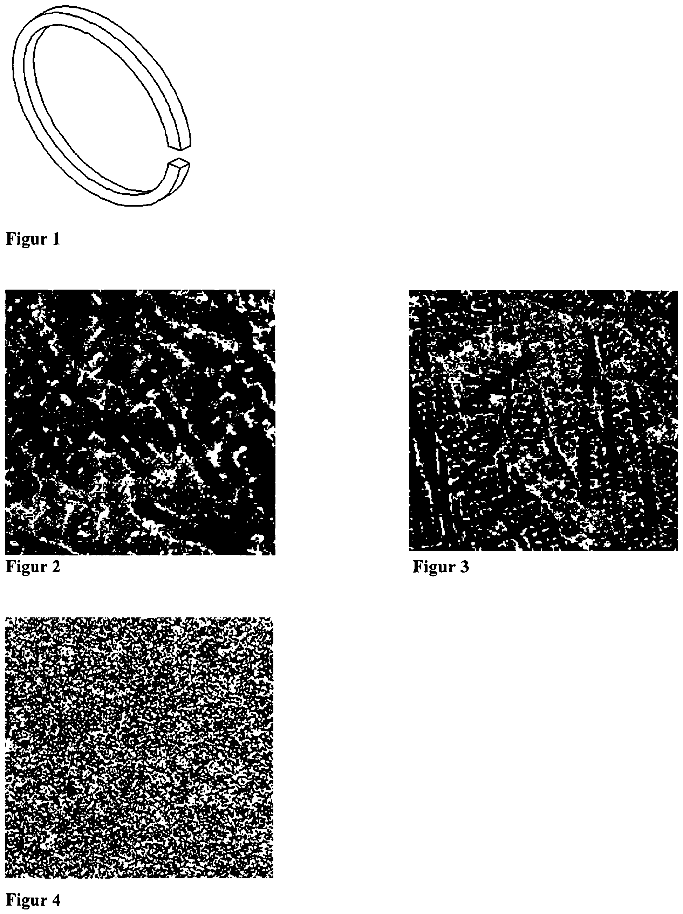

Es wurde ein Kolbenring (siehe Figur 1) aus einer gut nitrierbaren Stahlwerkstoffzusammensetzung der folgenden Zusammensetzung hergestellt:

| B: | 0,001 | Gew.-% | Pb: | 0,16 | Gew.-% |
|----|-------|--------|-----|-------|--------|
| C: | 0,8 | Gew.-% | S: | 0,009 | Gew.-% |
| Cr: | 13,0 | Gew.-% | Si: | 3,0 | Gew.-% |
| Cu: | 0,05 | Gew.-% | Sn: | 0,001 | Gew.-% |
| Mn: | 0,3 | Gew.-% | Ti: | 0,003 | Gew.-% |
| Mo: | 0,5 | Gew.-% | V: | 0,11 | Gew.-% |
| Nb: | 0,002 | Gew.-% | W: | 0,003 | Gew.-% |
| Ni: | 2,1 | Gew.-% | Fe: | Rest | |
| P: | 0,041 | Gew.-% | | | |

Dies erfolgte durch Herstellen einer Schmelze der Ausgangsmaterialien (Stahlschrott, Kreislaufmaterial und Legierungsstoffe), und Abgießen der Schmelze in eine vorgefertigten Grünsandform. Anschließend wurde die Form ausgeleert und der erhaltene Kolbenring geputzt. Der Kolbenring wurde daraufhin vergütet. Diese erfolgt durch Austenitisieren oberhalb der Ac3-Temperartur der Stahlwerkstoffzusammensetzung, Abschrecken in Öl, und Anlassen bei einer Temperatur im Bereich von 400 bis 700°C in einem Schutzgasofen.

Schließlich erfolgte eine Nitrierung der Oberfläche des erhaltenen Kolbenrings. Während die Härte vor dem Nitrieren 420 HV bzw. 42 HRC betrug, wurde in den nitrierten Bereichen eine Härte von mehr als 1000 HV erreicht, welche eine hohe Beständigkeit gegen Flankenverschleiß und Laufflächenverschleiß garantiert. Die Härte wurde hierbei nach DIN EN 10109 -1 und DIN EN 10008 -1 bestimmt. Das Elastizitätsmodul des erfindungsgemäßen Kolbenrings betrug 215.000 MPa.

Vergrößerter Ausschnitte des Grundgefüges des erfindungsgemäßen gegossenen Stahlkolbenrings sind in Figur 2 (500:1) und Figur 3 (200:1) gezeigt. Zum Vergleich zeigt Figur 3 das Grundgefüge eines herkömmlich hergestellten Stahlkolbenrings in derselben Vergrößerung (Gusseisenwerkstoff GOE 65 D der Firma Federal Mogul; chemische Zusammensetzung: 0,05 - 0,75 Gew.-% C, 11,0 - 15,0 Gew.-% Cr, max. 1,0 Gew.-% Mn, max. 0,6 Gew.-% Mo, max. 0,045 Gew.-% P, max. 1,0 Gew.-% Si, max. 0,1 Gew.-% V). Es ist zu erkennen, dass der erfindungsgemäße Stahlkolbenring ein dendritisches Grundgefüge aufweist. Die weißen Bereiche kennzeichnen Chromcarbide, welche an Korngrenzen entlang der Dendriten ausgeschieden sind. Hingegen zeigt der herkömmliche Stahlkolbenring ein fein verteiltes Gefüge ohne Dendriten. Nicht einmal die Zug- oder Walzrichtung des Kolbenrings ist erkennbar.

**Patentansprüche**

1.   Stahlkolbenring oder Stahlzylinderlaufbuchse, als Grundkörper eine Stahlwerkstoffzusammensetzung umfassend, welche eine gute Nitrierbarkeit aufweist, **dadurch gekennzeichnet, dass** die Stahlwerkstoffzusammensetzung aus den folgenden Elemente im angegebenen Anteil, bezogen auf 100 Gew.-% der Stahlwerkstoffzusammensetzung, besteht:

> B: 0 - 0,5 Gew.-%
> C: 0,5 - 0,95 Gew.-%
> Cr: 11,0 - 14,5 Gew.-%
> Cu: 0,003 - 2,0 Gew.-%
> Fe: 72,055 - 84,550 Gew.-%
> Mn: 0,1 - 1,0 Gew.-%
> Mo: 0,2 - 1,0 Gew.-%
> Nb: 0 - 0,05 Gew.-%
> Ni: 1,5 - 3,0 Gew.-%
> P: 0,003 - 0,055 Gew.-%
> Pb: 0,003 - 0,05 Gew.-%
> S: 0,003 - 0,04 Gew.-%
> Si: 3,0 - 4,0 Gew.-%
> Sn: 0 - 0,05 Gew.-%
> Ti: 0 - 0,2 Gew.-%
> V: 0,05-0,15 Gew.-%
> W: 0 - 0,4 Gew.-%,

wobei die Stahlwerkstoffzusammensetzung ein dendritisches Gefüge aufweist.

2.   Nitrierter Stahlkolbenring, **dadurch gekennzeichnet, dass** er durch Nitrieren eines Stahlkolbenrings nach Anspruch 1 erhältlich ist.

3.   Nitrierte Stahlzylinderlaufbuchse, **dadurch gekennzeichnet, dass** sie durch Nitrieren einer Stahlzylinderlaufbuchse nach Anspruch 1 erhältlich ist.

4.   Verfahren zur Herstellung eines Stahlkolbenrings oder einer Stahlzylinderlaufbuchse gemäß Anspruch 1, umfassend die folgenden Schritte:

> a. Herstellen einer Schmelze der Ausgangsmaterialien, und
> b. Abgießen der Schmelze in eine vorgefertigte Form.

5.   Verfahren gemäß Anspruch 4, **dadurch gekennzeichnet, dass** die Schmelze in einem Schmelzofen hergestellt wird.

6.   Verfahren gemäß einem der Ansprüche 4 oder 5, **dadurch gekennzeichnet, dass** es sich bei der Form um eine Grünsandform handelt.

7.   Verfahren gemäß einem der Ansprüche 4 oder 5, **dadurch gekennzeichnet, dass** es sich um ein Verfahren zur Herstellung einer Stahlzylinderlaufbuchse handelt und die Stahlzylinderlaufbuchse in einem Schleudergussverfahren hergestellt wird.

8.   Verfahren gemäß einem der Ansprüche 4 - 7, weiterhin umfassend die folgenden Schritte:

c. Austenitisieren des Stahlkolbenrings oder der Stahlzylinderlaufbuchse oberhalb seiner bzw. ihrer Ac3-Temperatur,
d. Abschrecken des Stahlkolbenrings oder der Stahlzylinderlaufbuchse in einem geeigneten Abschreckmedium, und
e. Anlassen des Stahlkolbenrings oder der Stahlzylinderlaufbuchse bei einer Temperatur im Bereich von 400 bis 700°C in einem Schutzgasofen.

9. Verfahren zur Herstellung eines Stahlkolbenrings gemäß Anspruch 2 oder einer Zylinderlaufbuchse gemäß Anspruch 3, umfassend die folgenden Schritte:

a. Durchführen eines Verfahrens nach einem der Ansprüche 4 - 8, und
b. Nitrieren des erhaltenen Stahlkolbenrings bzw. der erhaltenen Stahlzylinderlaufbuchse.

10. Verfahren gemäß Anspruch 9, **dadurch gekennzeichnet, dass** das Nitrieren durch Gasnitrieren, Plasmanitrieren oder Drucknitrieren erfolgt.

**Claims**

1. A steel piston ring or steel cylinder liner comprising as the main body a steel composition which has good nitridability, **characterized in that** the steel composition consists of the following elements in the proportions given, expressed with respect to 100 weight % of the steel composition:

| | | |
|---|---|---|
| B: | 0 - 0.5 | weight % |
| C: | 0.5 - 0.95 | weight % |
| Cr: | 11.0 - 14.5 | weight % |
| Cu: | 0.003 - 2.0 | weight % |
| Fe: | 72.055 - 84.550 | weight % |
| Mn: | 0.1 - 1.0 | weight % |
| Mo: | 0.2 - 1.0 | weight % |
| Nb: | 0 - 0.05 | weight % |
| Ni: | 1.5 - 3.0 | weight % |
| P: | 0.003 - 0.055 | weight % |
| Pb: | 0.003 - 0.05 | weight % |
| S: | 0.003 - 0.04 | weight % |
| Si: | 3.0 - 4.0 | weight % |
| Sn: | 0 - 0.05 | weight % |
| Ti: | 0 - 0.2 | weight % |
| V: | 0.05 - 0.15 | weight % |
| W: | 0 - 0.4 | weight %, |

wherein the steel composition has a dendritic microstructure.

2. A nitrided steel piston ring, **characterized in that** it can be obtained by nitriding a steel piston ring according to claim 1.

3. A nitrided steel cylinder liner, **characterized in that** it can be obtained by nitriding a steel cylinder liner according to claim 1.

4. A process for the manufacture of a steel piston ring or a steel cylinder liner according to claim 1, comprising the following steps:

a. producing a molten mass of the starting materials, and
b. casting the molten mass into a prepared mould.

5. The process according to claim 4, **characterized in that** the melt is produced in a smelt furnace.

6. The process according to claim 4 or claim 5, **characterized in that** the mould is a green sand mould.

7. The process according to claim 4 or claim 5, **characterized in that** it is a process for the manufacture of a steel cylinder liner and the steel cylinder liner is manufactured by a centrifugal casting process.

8. The process according to one of claims 4 - 7, further comprising the following steps:

c. austenitizating of the steel piston ring or the steel cylinder liner above its Ac3 temperature,
d. quenching the steel piston ring or the steel cylinder liner in a suitable quenching medium, and
e. tempering the steel piston ring or the steel cylinder liner at a temperature in the range 400°C to 700°C in a controlled atmosphere furnace.

9. The process for manufacturing a steel piston ring according to claim 2 or a cylinder liner according to claim 3, comprising the following steps:

a. carrying out a process according to one of claims 4 - 8, and
b. nitriding the steel piston ring or the steel cylinder liner obtained.

10. The process according to claim 9, **characterized in that** the nitriding is carried out by gas nitriding, plasma nitriding or pressure nitriding.

**Revendications**

1. Segment de piston en acier ou chemise de cylindre en acier, comprenant en tant que corps principal une composition d'acier faisant preuve d'une bonne aptitude à la nitruration, caractérisé(e) en ce que la composition d'acier est constituée des éléments suivants, dans la part indiquée, en rapport à 100 % en poids de la composition d'acier :

| | | |
|---|---|---|
| B : | de 0 à 0,5 | % en poids |
| C : | de 0,5 à 0,95 | % en poids |
| Cr : | de 11,0 à 14,5 | % en poids |
| Cu : | de 0,003 à 2,0 | % en poids |
| Fe : | de 72,055 à 84,550 | % en poids |
| Mn : | de 0,1 à 1,0 | % en poids |
| Mo : | de 0,2 à 1,0 | % en poids |
| Nb : | de 0 à 0,05 | % en poids |
| Ni : | de 1,5 à 3,0 | % en poids |
| P : | de 0,003 à 0,055 | % en poids |
| Pb : | de 0,003 à 0,05 | % en poids |
| S : | de 0,003 à 0,04 | % en poids |
| Si : | de 3,0 à 4,0 | % en poids |
| Sn : | de 0 à 0,05 | % en poids |
| Ti : | de 0 à 0,2 | % en poids |
| V : | de 0,05 à 0,15 | % en poids |
| W : | de 0 à 0,4 | % en poids |

la composition d'acier présentant une structure dendritique.

2. Segment de piston en acier nitruré, **caractérisé en ce qu'**il peut être obtenu par nitruration d'un segment de piston selon la revendication 1.

3. Chemise de cylindre en acier nitruré, **caractérisée en ce qu'**elle peut être obtenue par nitruration d'une chemise de cylindre en acier selon la revendication 1.

4. Procédé destiné à fabriquer un segment de piston en acier ou une chemise de cylindre en acier selon la revendication 1, comprenant les étapes suivantes :

   a. de la fabrication d'une masse fondue des matières de départ et
   b. de la coulée de la masse dans un moule préfabriqué.

5. Procédé selon la revendication 4, **caractérisé en ce qu'**on produit la masse fondue dans un four à fusion.

6. Procédé selon l'une quelconque des revendications 4 ou 5, **caractérisé en ce que** le moule est un moule en sable vert.

7. Procédé selon l'une quelconque des revendications 4 ou 5, **caractérisé en ce qu'**il s'agit d'un procédé destiné à fabriquer une chemise de cylindre en acier et qu'on fabrique la chemise de cylindre en acier par un procédé de coulée par centrifugation.

8. Procédé selon l'une quelconque des revendications 4 à 7, comprenant par ailleurs les étapes suivantes :

   c. de l'austénitisation du segment de piston en acier ou de la chemise de cylindre en acier au-delà de sa température Ac3,
   d. de la trempe du segment de piston en acier ou de la chemise de cylindre en acier dans un agent de trempe adapté,
   e. du revenu du segment de piston en acier ou de la chemise de cylindre en acier à une température de l'ordre de 400 à 700 °C dans un four à atmosphère contrôlée.

9. Procédé destiné à fabriquer un segment de piston en acier selon la revendication 2 ou une chemise de cylindre en acier selon la revendication 3, comprenant les étapes suivantes :

   a. de la réalisation d'un procédé selon l'une quelconque des revendications 4 à 8 et
   b. de la nitruration du segment de piston en acier obtenu ou de la chemise de cylindre en acier obtenue.

10. Procédé selon la revendication 9, **caractérisé en ce que** la nitruration s'effectue par nitruration au gaz, nitruration au plasma ou nitruration sous pression.

**Figur 1**

**Figur 2**

**Figur 3**

**Figur 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0295111 A2

- JP 3122257 A